# EUROPEAN PATENT APPLICATION

(11) **EP 4 512 716 A1**
(43) Date of publication of application: **26.02.2025**
(21) Application number: 23192497.8
(22) Date of filing: 21.08.2023
(51) Int. Cl.: B64D 11/04

(54) **PANELS**

(71) Applicant: B/E Aerospace (UK) Limited, Leighton Buzzard, Bedfordshire LU7 4TB (GB)
(72) Inventor: GROCOTT, Edward John Reynard, Leighton Buzzard (GB); WIEBE, Zac Lewis, Wichita (US); OHL, Craig T, Maize (US); BLUMBERG, Rafael, Leighton Buzzard (GB)
(74) Representative: Dehns

(57) **Abstract**

A panel (28P, 30, 32, 28S) for use in the construction of a galley (10) of an aircraft (2) is disclosed. The panel comprises a frame (50), at least one insulation panel (40, 42,44, 46, 48), and a cover panel (54). The frame comprises first and second opposing faces (88, 90) and one or more edge faces (92), and each edge face extends between the first and second faces. The cover panel has first and second opposing faces (104, 106) and each insulation panel has first and second opposing faces (100, 102). One or more of the edge faces of the frame define a housing aperture (94) and the frame is fixed to the cover panel with the first face of the frame adjacent to the second face of the cover panel. The housing aperture is configured to receive the at least one insulation panel, and at least one insulation panel is fixed to the cover panel with the first face of the at least one insulation panel adjacent to the second face of the cover panel.

## Description

This disclosure relates to panels, and in particular, panels suitable for use in the construction of a galley on an aircraft.

Some aircraft, for example commercial passenger aircraft typically include one or more galleys for use in storing and preparing food and beverages on the aircraft. The food and beverages are typically stored in galley carts. At lease some of those carts are stored in cooled or refrigerated cart compartments in the galley.

The or each galley is typically separated from the rest of the aircraft by one or more walls. Each wall is typically formed from one or more panels. The or each panel is typically designed to be lightweight and robust. Typically the panels include or are connected to multiple metal structural members. The multiple metal members typically form thermal bridges between the faces of the panels / wall constructed from the panels.

The cooled or refrigerated compartments are typically at least partially defined by a panel or part of a panel. That panel or part of a panel may also be part of a wall that at least partially defines the galley. As a result, the thermal efficiency of the cooled or refrigerated compartments is at least partially dependent on the insulative properties of the or each panel. It is known that the less insulated and thus thermally efficient the cooled or refrigerated compartments are, the greater the amount of cooling of those compartments will be required. The greater the amount of cooling required, the larger, and thus heavier and more energy consumptive, the cooling apparatus has to be to achieve the desired level of cooling. This leads to greater fuel use and thus greater running costs for the aircraft compared to smaller and less energy consumptive cooling apparatus.

According to a first aspect of the present disclosure there is provided a panel for use in the construction of a galley of an aircraft. The panel includes a frame, at least one insulation panel, and a cover panel. The frame includes first and second opposing faces and one or more edge faces, and each edge face extends between the first and second faces. The cover panel has first and second opposing faces. Each insulation panel has first and second opposing faces. One or more of the edge faces of the frame define a housing aperture. The frame is fixed to the cover panel with the first face of the frame adjacent to the second face of the cover panel. The housing aperture is configured to receive the at least one insulation panel, and the insulation panel is fixed to the cover panel with the first face of at least one insulation panel adjacent to the second face of the cover panel.

When the frame is fixed to the cover panel with the first face of the frame adjacent to the second face of the cover panel, the first face of the frame is, in some embodiments, in contact with the second face of the cover panel. In other embodiments the first face of the frame is spaced from the second face of the cover panel. Such spacing is typically of a relatively small dimension and is as a result of the dimensions of the fixing means that fix the frame to the cover panel.

When the insulation panel is fixed to the cover panel with the first face of the insulation panel adjacent to the second face of the cover panel, the first face of the insulation panel is, in some embodiments, in contact with the second face of the cover panel. In other embodiments the first face of the insulation panel is spaced from the second face of the cover panel. Such spacing is typically of a relatively small dimension and is as a result of the dimensions of the fixing means that fix the insulation panel to the cover panel.

A panel of the first aspect may also or in the alternative be used for the construction of at least part of a cooled or refrigerated cart compartment in the galley.

A panel is to be understood to have first and second opposed faces with the body of the panel being located between those faces. Dimensionally the distance between the first and second faces is significantly smaller than the dimensions of the faces in directions along the surfaces of the faces.

The perimeter of a panel is to be understood as the path of the edge of one or both of the first and second faces of the panel.

In an embodiment of the above embodiment, the housing aperture is of substantially the same configuration as the insulation panel. The configuration of the insulation panel is the shape of the perimeter of the insulation panel and the dimensions of the insulation panel.

In an embodiment of the above embodiment when there are a plurality of insulation panels, the housing aperture is of substantially the same collective configuration as the insulation panels when the insulation panels are arranged side by side. That is when the insulation panels are all in the same plane.

In an embodiment of the above embodiment when there are a plurality of insulation panels, the housing aperture is of substantially the same collective configuration as the insulation panels when the insulation panels are stacked. That is the first face of one insulation panel overlies the second face of an adjacent insulation panel.

In an embodiment of any of the above embodiments, the first and second opposed faces of one or more of the panels are parallel or substantially or approximately parallel with each other.

In an embodiment of any of the above embodiments, the insulation panel or the insulation panels collectively when arranged side by side or when stacked is / are a loose fit within the housing aperture. A loose fit may be such that the difference in dimensions of the insulation panel or the insulation panels collectively when arranged side by side or when stacked and the dimensions of the housing aperture is more that 0.0 mm and less than 10 mm, less than 8 mm, less than 6 mm, less than 4 mm or less than 2 mm.

In an embodiment of any of the above embodiments, when there is one insulation panel, the first and second faces of the insulation panel are spaced from each other by a distance x, the first and second faces of the frame are spaced from each other by a distance y, the distances x and y extend in approximately parallel directions, and distance x is less than distance y or distance x is equal to distance y.

In an embodiment of any of the above embodiments, when there are more than one insulation panels which are located side by side, the first and second faces of each insulation panel are spaced from each other by a distance x, the first and second faces of the frame are spaced from each other by a distance y, the distances x and y extend in approximately parallel directions, and distance x is less than distance y or distance x is equal to distance y.

In some embodiments the distances x of two or more of the insulation panels are different and the largest of the distances x is less than distance y or the largest of the distances x is equal to distance y.

In an embodiment of any of the above embodiments, when there are more than one insulation panel which are stacked, the first and second faces of each insulation panel are spaced from each other by a distance x, the first and second faces of the frame are spaced from each other by a distance y, the distances x and y extend in approximately parallel directions, and the sum of the distances x is less than distance y or the sum of the distances x is equal to distance y.

In an embodiment of any of the above embodiments, the frame is permanently fixed to the cover panel.

In an embodiment of any of the above embodiments, the frame is permanently fixed to the cover panel using an adhesive.

In an embodiment of any of the above embodiments, the frame is temporarily fixed to the cover panel.

In an embodiment of any of the above embodiments, when the frame is temporarily fixed to the cover panel, and the fixation between the frame and the cover panel is achieved using one or more of a releasable adhesive, a double-sided adhesive tape, and a burr fastener

In an embodiment of any of the above embodiments, at least one insulation panel is fixed to the cover panel using one or more of a releasable adhesive, a double-sided adhesive tape, and a burr fastener.

In an embodiment of any of the above embodiments, the distance from the second face of the cover panel to the second face of the or each insulation panel is less than the distance of the second face of the cover panel to the second face of the frame.

An advantage of such an embodiment is that the or each insulation panel is protected from damage to its first face by the cover panel, and the second face of the insulation panel is recessed in the housing aperture with the result that the second face of the insulation panel is at least partially protected from impact or abrasion by the frame.

In an embodiment of any of the above embodiments, the frame is comprised of a plurality of frame elements, and the frame elements are joined together to form the frame.

In an embodiment of any of the above embodiments, the frame or at least one frame element is formed from a polycarbonate material.

In an embodiment of any of the above embodiments, the frame or at least one frame element is formed from a hollow elongate section.

In an embodiment of any of the above embodiments, the frame or at least one frame element is formed from a rectangular hollow elongate section.

In an embodiment of any of the above embodiments, at least two frame elements are joined by a corner element.

In an embodiment of any of the above embodiments, when the at least two frame elements are hollow sections, the corner element is configured to extend into a portion of the hollow part of each hollow section.

In an embodiment of any of the above embodiments, the corner element is formed from an aluminium block.

In an embodiment of any of the above embodiments, the panel comprises a structural panel, the structural panel comprises first and second opposing faces, and the structural panel is fixed to the frame with the first face of the structural panel adjacent to the second face of the frame.

When the structural panel is fixed to the frame with the first face of the structural panel adjacent to the second face of the frame, the first face of the structural panel is, in some embodiments, in contact with the second face of the frame. In other embodiments, the first face of the structural panel is spaced from the second face of the frame. Such spacing is typically of a relatively small dimension and is as a result of the dimensions of the fixing means that fix the structural panel to the frame or the presence of one or more spacer elements, or both.

In an embodiment of any of the above embodiments, when the panel is for use in the construction of the galley, the panel is so configured that, in use, the second face of the structural panel faces toward the galley, and the first face of the cover panel faces away from the galley. In this embodiment, the first face of the cover panel faces away from the galley and thus towards the rest of the cabin within the aircraft. As a result, the first face of the cover panel is seen by any passengers within the cabin. This is advantageous because the first face of the cover panel may be formed to be smooth and as a result aesthetically pleasing. The construction of the panel of the present disclosure is such that the first face of the cover panel will not show the shapes or shadows of the shapes of the other elements of the panel.

In an embodiment of the above embodiment, the first face of the cover panel supports decorative trim. The decorative trim may be selected to match the décor of the rest of the cabin. The decorative trim may include graphics, logos and or text as desired.

In an embodiment of any of the above embodiments, the structural panel is releasably fixed to the frame using at least one mechanical fixing means.

In an embodiment of any of the above embodiments, the or each mechanical fixing means is configured to be operable from the second face of the structural panel.

In an alternative embodiment of any of the above embodiments, the or each mechanical fixing means is configured to be operable from the first face of the frame.

In an embodiment of any of the above embodiments, the frame or the structural panel comprises a non-zero number of elements of a mechanical fixing system.

In an embodiment of the above embodiment, the or each element of the mechanical fixing system in the frame or the structural panel is one of a male or female part of a male-female fixing system.

In an embodiment of any of the above embodiments, at least one female part of the mechanical fixing system includes a threaded aperture. In such an embodiment a threaded screw or bolt is used to fix the structural panel to the frame.

In an embodiment of any of the above embodiments, at least one female part of the mechanical fixing system is the female part of a quarter or half turn fixing system. In such an embodiment a male part of the quarter or half turn fixing system is used to fix the structural panel to the frame.

In an embodiment of any of the above embodiments, the frame defines two or more housing apertures and the panel includes at least the same number of insulation panels as there are housing apertures, each housing aperture is defined by one or more edge faces of the frame, and each housing aperture is configured to receive at least one of the insulation panels.

In an embodiment of any of the above embodiments, the or each insulation panel is a vacuum insulation panel.

In an embodiment of any of the above embodiments where there are two or more insulation panels, each insulation panel is of the same dimensions as each other insulation panel.

An advantage of the panel of the present disclosure is that the insulation panel may be located on the panel in the position where it will be required, and not in a position where no insulation is necessary. This minimises the amount of insulation panel(s) required and minimises the cost and weight associated with the insulation panel(s).

In an embodiment of any of the above embodiments, the or at least one vacuum insulation panel is a microporous vacuum insulation panel made from fumed silica. An example of such a vacuum insulation panel is a va-Q-pro panel (trade mark) available from va-Q-tec AG of Würzburg, Germany.

In an embodiment of any of the above embodiments, the cover panel is formed from a glass reinforced polymer.

In an embodiment of any of the above embodiments at least one of the first and second faces of at least one of the frame, insulation panel, cover panel, and structural panel is flat or approximately flat.

In an embodiment of any of the above embodiments both of the first and second faces of each of the frame, insulation panel, cover panel, and structural panel is flat or approximately flat.

According to a second aspect of the present disclosure there is provided a galley for an aircraft, in which at least part of at least one wall defining the galley comprises at least one panel according to the first aspect of the present disclosure.

According to a third aspect of the present disclosure there is provided a galley for an aircraft, in which at least part of at least one compartment within the galley comprises at least one panel according to the first aspect of the present disclosure.

According to a fourth aspect of the present disclosure there is provided an aircraft, the aircraft comprising at least one galley according to the second aspect of the present disclosure and / or at least one compartment according to the third aspect of the present disclosure.

The panel, galley, and aircraft of the first, second, third, and fourth aspects of the present disclosure can include one or more, or all, of the embodiments described above, as appropriate

The present disclosure will be further described and explained by way of example with reference to the accompanying drawings in which
Figure 1 shows a schematic embodiment of an aircraft according to the present disclosure;
Figure 2 shows a schematic perspective view of an embodiment of a galley according to the present disclosure;
Figure 3 shows a schematic perspective view of an embodiment of a panel according to the present disclosure;
Figure 4 shows a schematic exploded view of the panel of Figure 3;
Figure 5 shows a schematic first view of an element of the panel of Figure 3;
Figure 6 shows a schematic perspective second view of the element of Figure 5;
Figure 7 shows a schematic enlarged view of a part B of the element of Figure 5;
Figure 8 shows a schematic sectional view of part of the element of Figure 5 along the section line C-C';
Figure 9 shows a schematic sectional view of the panel of Figure 3 along section line A-A'; and
Figure 10 shows an enlargement of portion D of Figure 9;

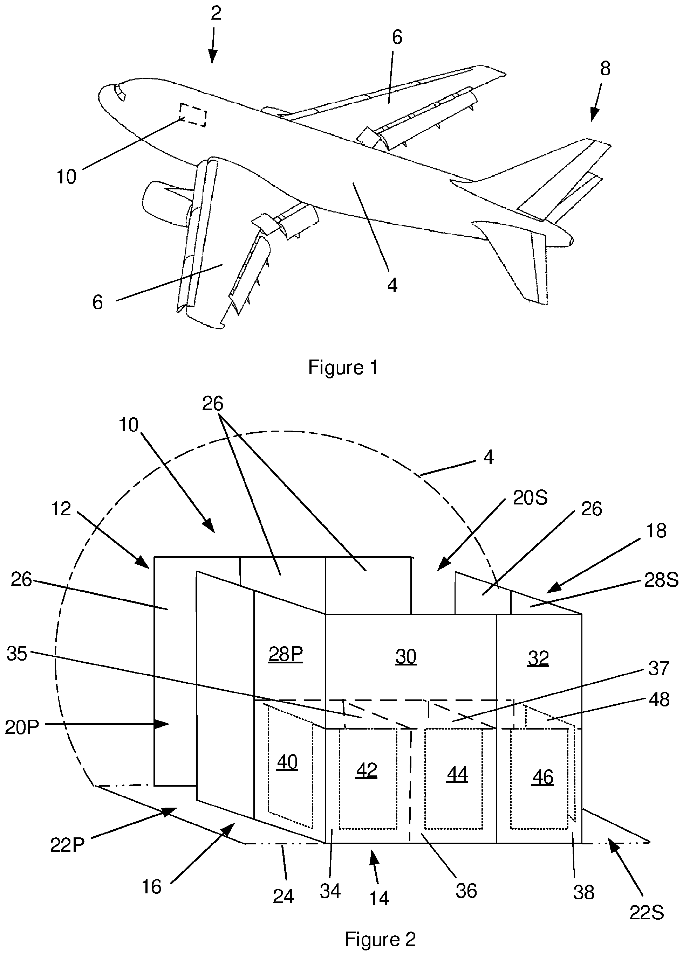

With reference to Figure 1, an aircraft 2 includes a body 4, a pair of wings 6, and a tail 8. Located within the body 4 is a galley 10 for the storage and preparation of food and beverages.

With reference to Figure 2, the galley 10 is formed from a fore / forward wall 12, an aft / rear wall 14, a port / left wall 16 and a starboard / right wall 18. Entrance and exit from the galley 10 is via port and starboard openings 20P, 20S into the port and starboard passages 22P, 22S respectively. The fore, aft, port and starboard walls 12, 14, 16, 18 are supported on a deck 24.

The fore wall 12 is formed from three panels 26 that do not fall within the scope of the present disclosure.

Each of the port and starboard walls 16, 18 are formed from a panel 26 (which does not fall within the scope of the present disclosure), and a panel 28P, 28S respectively (which do fall within the scope of the present disclosure).

The aft wall 14 is formed from a panel 30 and a panel 32 (both of panels 30 and 32 fall within the scope of the present disclosure).

Within the galley 10 there are three cooled or refrigerated cart compartments 34, 36, 38. Those compartments are cooled by a suitable cooling system (not shown) and separated from each other by internal walls 35, 37.

To increase the efficiency of the cooling of compartment 34, panels 28P and 30 include insulation panels 40, 42 respectively. In the illustrated embodiment the insulation panels 40, 42 have the form of vacuum insulation panels (VIPs).

To increase the efficiency of the cooling of compartment 36, panel 30 includes insulation panel 44. Again, in the illustrated embodiment the insulation panel 44 has the form of a vacuum insulation panel (VIP).

To increase the efficiency of the cooling of the compartment 38, panels 32 and 28S include insulation panels 46, 48 respectively. Again, in the illustrated embodiment the insulation panels 46, 48 have the form of a vacuum insulation panel (VIP).

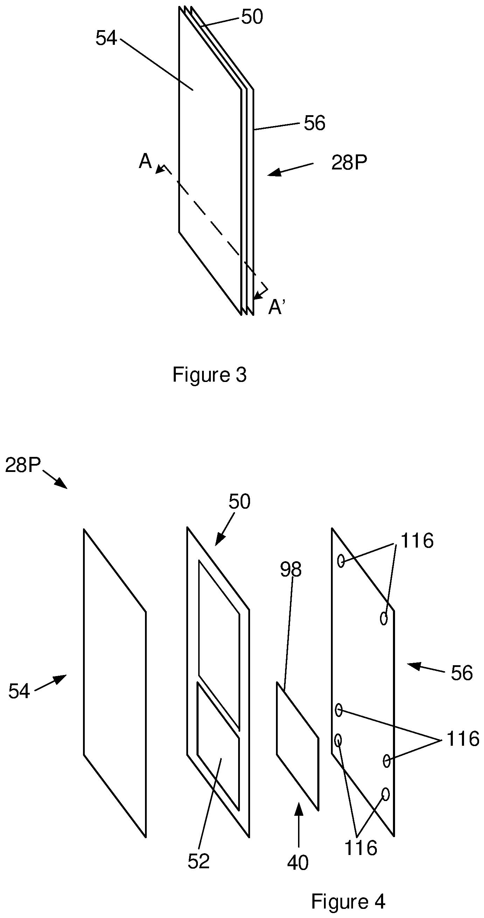

With reference to Figures 2 to 10, panel 28P is formed from a frame 50, a cover panel 54, insulation panel 40, and a structural panel 56.

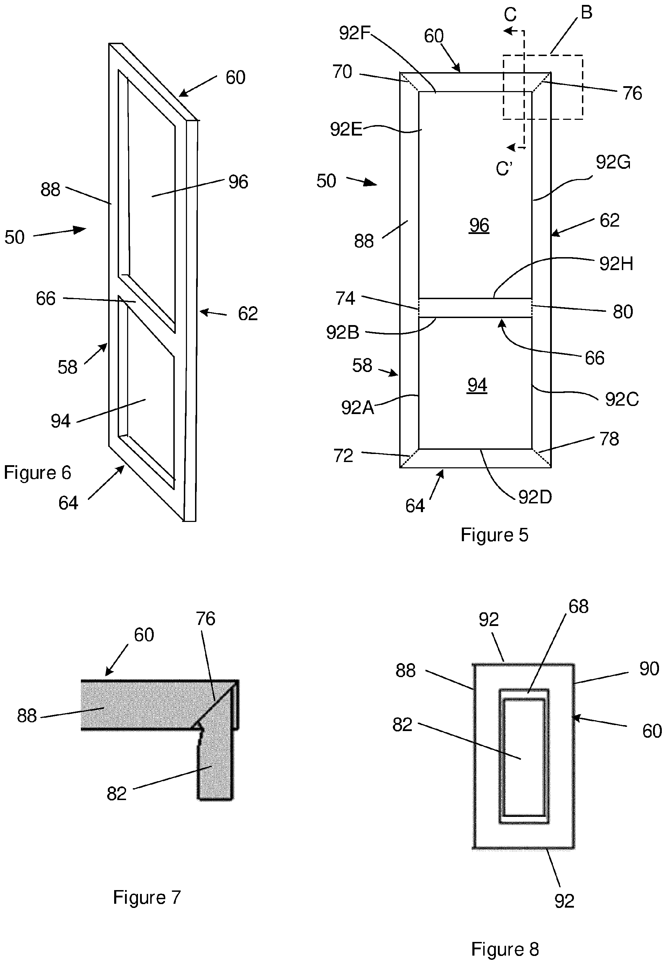

The frame 50 is formed from frame elements 58, 60, 62, 64, and 66. The frame elements are each a rectangular elongate hollow section including an inner void 68 as shown in Figure 8. The frame elements are formed from a polycarbonate material.

Frame element 58 is joined to frame element 60 at corner joint 70, to frame element 64 at joint corner 72, and to frame element 66 at joint 74. Frame element 62 is joined to frame element 60 at corner joint 76, to frame element 64 at corner joint 78, and frame element 66 at joint 80.

Within the void 68 at each of corner joints 70, 72, 76 and 78 is a corner element 82 (shown in Figure 8 in connection with corner joint 76). Each corner element 82 is L-shaped and each of the limbs of the L extends into the void 68 of frame element 60 or 62 to form the corner joint 76 and to provide the frame 50 with structural rigidity.

At joints 74 and 80 a linear element (not shown) extends from an end of the void 68 of the frame element 66 through the edge faces 92 of the frame elements 58, 62 that face the other of frame elements 58, 62 and into the void 68 of frame elements 58, 62 respectively.

The frame elements that make up joints 70, 72, 74, 76, 78 and 80 are fixed to each other using a suitable adhesive to assist in the rigidity of the frame 50.

Each of the frame elements 58, 60, 62, 64, and 66 have opposing first and second faces which collectively form first face 88 and second face 90 of frame 50.

The opposing first and second faces of the frame elements 58, 60, 62, 64, and 66 are joined by side edges 92.

The frame 50 is, as shown in Figures 5 and 6, so configured that the frame defines a housing aperture 94 and a void aperture 96. Housing aperture 94 is defined by the parts of a side edge 92 of frame elements 58, 66, 62, and 64 which are labelled 92A to 92D in Figure 5. The void aperture 96 is defined by the parts of a side edge 92 of frame elements 58, 60, 62, and 66 which are labelled 92E to 92H in Figure 5.

The void aperture 96 remains empty which contributes to the lightness of the panel 28P.

The housing aperture 94 is so located in the frame 50 that, when the panel 28P is in place and partially forming the galley 10, the housing aperture 92 is in a position relative to compartment 34 which is to be insulated.

The insulation panel 40 has an outer perimeter 98, and first and second faces 100, 102. The shape and dimensions of the side edges 92A to 92D that define the housing aperture 94 and the outer perimeter 98 of the insulation panel 40 are such that the insulation panel 40 is located within the housing aperture 94 with the side edges 92A to 92D and the outer perimeter 66 closely adjacent to each other. In some embodiments the spacing between the side edges 92A to 92D and the outer perimeter 66 is more that 0.0 mm and less than 10 mm, less than 8 mm, less than 6 mm, less than 4 mm or less than 2 mm.

The first and second opposing faces 100, 102 of the insulation panel 40 are spaced from each other by a distance x, and the first and second opposing faces 88, 90 of the frame 50 are spaced from each other by a distance y. The distances x and y extend in approximately parallel directions, and distance x is less than distance y. In some other non-illustrated embodiments the distance x is equal to distance y.

The cover panel 54 has first and second opposed faces 104, 106, and a portion of the second face 106 of the cover panel 54 is adjacent to a portion of the first face 88 of the frame 50 when the cover panel 54 is permanently or temporarily fixed to the frame 50.

The cover panel 54 is formed from a glass re-enforced polymer.

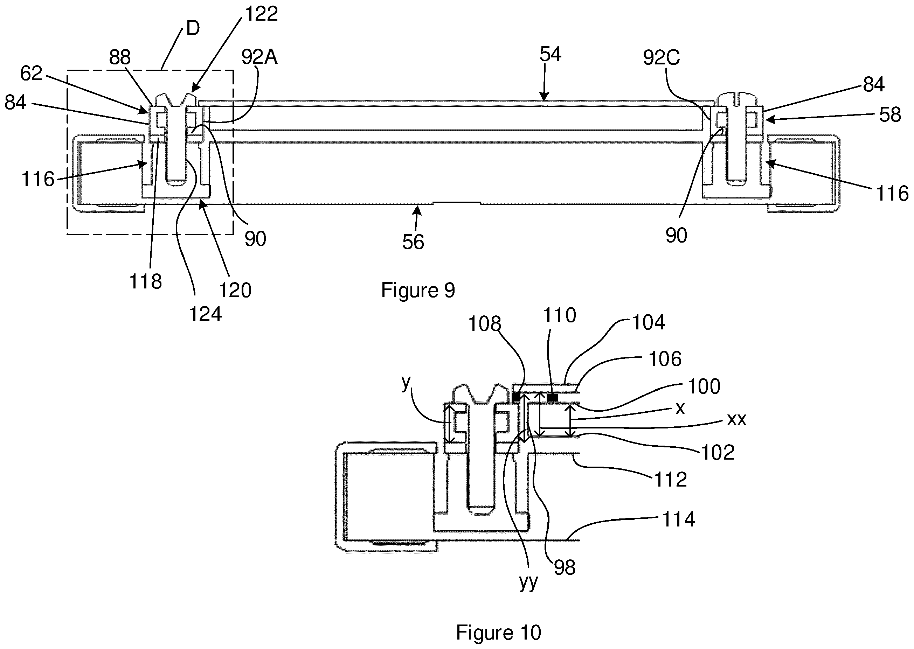

The cover panel 54 is permanently or temporarily fixed to the frame 50 by one or more fixing elements 108 (for clarity only one fixing element 108 is shown in Figure 10).

When the cover panel 54 is permanently fixed to the frame 50 the one or more fixing elements 108 are a suitable known adhesive. In other embodiments other permanent fixing means may be used.

When the cover panel 54 is temporarily or releasably fixed to the frame 50 using at least one of the one or more fixing elements 108 is a releasable adhesive, a double-sided adhesive tape, or a burr fastener.

The insulation panel 40 is fixed to the cover panel 54 with the first face 100 of the insulation panel 40 adjacent to the second face 106 of the cover panel 54 by at least one fixing element 110 (for clarity only one fixing element 110 is shown in Figure 10). In the illustrated embodiment the fixing element 110 is one of a releasable adhesive, a double-sided adhesive tape, and a burr fastener, or a mixture thereof. The first face 100 of the insulation panel 40 and the second face 106 of the cover panel 54 will typically be spaced from each other by the thickness of the or each fixing element 110.

The structural panel 56 has a first and a second face 112, 114. The structural panel 56 is fixed to the frame 50 with the first face 112 of the structural panel 56 adjacent the second face 90 of the frame 54 by a non-zero number, typically a plurality, of mechanical fixing means 116. In the illustrated embodiment the first face 112 of the structural panel 56 and the second face 90 of the frame 54 are separated by a spacer 118. In other non illustrated embodiments the spacer 118 may be absent and the first face 112 of the structural panel 56 in contact with the second face 90 of the frame 54.

The mechanical fixing means 116 are releasable so that the frame 50 and structural panel 56 may be released from each other if required, for example to access the insulation panel 40 in the housing aperture 94.

The mechanical fixing means 116 includes a female portion 120 and a male portion 122. The female portion 120 is fixed into the structural panel 56 by fixing means not shown. In some embodiments the fixing means is a suitable permanent adhesive. The female portion 120 includes a female threaded portion 124 which mouths through the first surface 112 of the structural panel 56.

The male portion 122 of the mechanical fixing means 116 extends through the frame 50. The male portion 122 includes a threaded machine screw 126 which is configured to threadingly engage with the female threaded portion 124.

In other non-illustrated embodiments other mechanical fixing means may be used.

When the insulation panel 40 is fixed to the cover panel 54 the distance xx (from the second face 106 of the cover panel 54 to the second face 102 of the insulation panel 40) is less than the distance yy (the distance of the second face 106 of the cover panel 54 to the second face 90 of the frame 50). This has the effect that there is a space between the second face 102 of the insulation panel 40 and the first face 112 of the structural panel 56. This serves to protect the insulation panel 40 from damage resulting from rubbing or compression caused by relative movement of the cover panel 54 and the structural panel 56.

Panels 32 and 28S are configured and constructed in a similar fashion to panel 28P.

Panel 30 is configured and constructed in a similar fashion to panel 28P with the exception of there being two housing apertures 94 defined by frame 50, insulation panel 42 is located in one of the housing apertures 94, and insulation panel 44 is located in the other of the housing apertures 94.

The above description is meant to be exemplary only, and one skilled in the art will recognize that changes may be made to the embodiments described without departing from the scope of the disclosure. Still other modifications which fall within the scope of the present disclosure will be apparent to those skilled in the art, in light of a review of this disclosure.

Various aspects of the method and apparatus disclosed in the various embodiments may be used alone, in combination, or in a variety of arrangements not specifically discussed in the embodiments described above. This disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole.

## Claims

1. A panel for use in the construction of a galley of an aircraft in which
the panel comprises a frame, at least one insulation panel, and a cover panel;
the frame comprises first and second opposing faces and one or more edge faces, and each edge face extends between the first and second faces;
the cover panel has first and second opposing faces;
each insulation panel has first and second opposing faces;
one or more of the edge faces of the frame define a housing aperture;
the frame is fixed to the cover panel with the first face of the frame adjacent to the second face of the cover panel;
the housing aperture is configured to receive the at least one insulation panel; and at least one insulation panel is fixed to the cover panel with the first face of the at least one insulation panel adjacent to the second face of the cover panel.

2. A panel according to claim 1 in which the housing aperture is of substantially the same configuration as the insulation panel or the insulation panels collectively when arranged side by side or when stacked.

3. A panel according to claim 1 or 2 in which, when there is one insulation panel, the first and second faces of the insulation panel are spaced from each other by a distance x, the first and second faces of the frame are spaced from each other by a distance y, the distances x and y extend in approximately parallel directions, and distance x is less than distance y or distance x is equal to distance y.

4. A panel according to any of claims 1 to 3 in which the frame is permanently fixed to the cover panel, or the frame is temporarily fixed to the cover panel.

5. A panel according to claim 4 in which, when the frame is temporarily fixed to the cover panel by at least one fixing means, and at least one fixing means is a releasable adhesive, a double-sided adhesive tape, or a burr fastener.

6. A panel according to any of claims 1 to 5 in which at least one insulation panel is fixed to the cover panel by at least one fixing means, and at least one fixing means is a releasable adhesive, a double-sided adhesive tape, or a burr fastener.

7. A panel according to any of claims 1 to 6 in which the distance from the second face of the cover panel to the second face of each insulation panel is less than the distance of the second face of the cover panel to the second face of the frame.

8. A panel according to any of claims 1 to 7 in which the frame is comprised of a plurality of frame elements, and the frame elements are joined together to form the frame.

9. A panel according to any of claims 1 to 8 in which the panel comprises a structural panel, the structural panel comprises first and second opposing faces, and the structural panel is fixed to the frame with the first face of the structural panel adjacent to the second face of the frame.

10. A panel according to claim 9 in which the structural panel is releasably fixed to the frame using at least one mechanical fixing means.

11. A panel according to claim 10 in which the or each mechanical fixing means is configured to be operable from the second face of the structural panel.

12. A panel according to any of claims 1 to 11 in which the frame defines two or more housing apertures and the panel comprises at least the same number of insulation panels, each housing aperture is defined by one or more edge faces of the frame, and each housing aperture is configured to receive at least one of the insulation panels.

13. A panel according to any of claims 1 to 12 in which the or each insulation panel is a vacuum insulation panel.

14. A panel according to any of claims 1 to 13 in which the cover panel is formed from a glass re-enforced polymer.

15. A galley for an aircraft, in which at least part of the galley comprises at least one panel according to any of claims 1 to 14.
